Europäisches Patentamt

European Patent Office

Office européen des brevets

(19)

(11) Numéro de publication: **0 304 366**
**B1**

(12) **FASCICULE DE BREVET EUROPEEN**

(45) Date de publication du fascicule du brevet: **09.01.91**

(51) Int. Cl.⁵: **B 62 D 25/14**

(21) Numéro de dépôt: **88401997.7**

(22) Date de dépôt: **29.07.88**

(54) **Pièce de structure pour véhicule destinée à être fixée à cette dernière pour servir au moins partiellement de tablier séparateur.**

(30) Priorité: **17.08.87 FR 8711645**

(43) Date de publication de la demande:
**22.02.89 Bulletin 89/08**

(45) Mention de la délivrance du brevet:
**09.01.91 Bulletin 91/02**

(84) Etats contractants désignés:
**DE ES GB IT SE**

(56) Documents cités:
**EP-A-0 124 093**
**US-A-4 391 465**

(73) Titulaire: **ECIA - EQUIPEMENTS ET COMPOSANTS POUR L'INDUSTRIE AUTOMOBILE**
**F-25400 Audincourt (Doubs) (FR)**

(72) Inventeur: **Bordier, José**
**8 rue Louis Aragon**
**F-25400 Audincourt (FR)**
Inventeur: **Betencourt, Joseph**
**14 A rue des Vignes**
**F-25150 Autechaux Roide (FR)**

(74) Mandataire: **Mestre, Jean et al**
**c/o CABINET LAVOIX 2, place d'Estienne d'Orves**
**F-75441 Paris Cédex 09 (FR)**

EP 0 304 366 B1

Courier Press, Leamington Spa, England.

**Description**

La présente invention concerne les véhicules automobiles et, plus particulièrement, une pièce de structure pour ces derniers destinée à y être fixée par exemple automatiquement.

L'invention se rapporte plus spécialement à une pièce de structure pour véhicule destinée à être fixée à cette dernière pour servir au moins partiellement de tablier séparant un compartiment antérieur d'un habitacle.

Les véhicules contemporains, en particulier, ceux dits de "tourisme", sont constitués d'une structure tenant lieu de coque et/ou de châssis, obtenue essentiellement à partir d'éléments métalliques faits de tôles, relativement minces, emboutis et soudés.

Une telle structure comprend, notamment, des traverses associées à des flancs qui, entre autres, contribuent à séparer le compartiment antérieur, souvent moteur, de l'habitacle. Ces traverses portent, habituellement, un tablier et divers socles et consoles auxquels sont fixés des sous-ensembles variés.

Ces socles ou consoles et tabliers sont généralement faits à partir de constituants emboutis dans des tôles métalliques qui sont assemblés pour constituer des entités mécanosoudées.

Un tel tablier est habituellement destiné à séparer ce compartiment moteur de l'habitacle de manière à les individualiser physiquement l'un de l'autre et, aussi, à assurer un bon isolement acoustique. Suivant la nature des matériaux utilisés, ce tablier sert de paroi coupe-feu qui contribue à retarder la propagation d'un incendie qui se serait déclaré dans le véhicule. Un tel tablier est aussi souvent conçu pour livrer passage à une colonne de direction et aux composants d'un pédalier. En outre, il doit aussi participer à la construction de l'auvent qui sert à prélever de l'air extérieur pour le renouvellement de celui de l'habitacle et sert aussi à supporter tout ou partie de ce qui est nécessaire au maintien de la propreté du pare-brise c'est-à-dire l'ensemble essuie-glace avec son moteur et sa timonerie et le lave-glace avec sa pompe et ses gicleurs.

Il est relativement classique de faire un tel caisson d'auvent à l'aide de feuilles en matériaux rigides appliquées les unes contre les autres de manière à former un ensemble multistrate dont les divers feuillets peuvent être alors conformés pour constituer à la fois la paroi séparatrice et le caisson.

La confection d'un tablier à l'aide de feuilles assemblées pour constituer des parois multistrates ne donne pas entière satisfaction.

En effet, cette technique fait appel à des feuillets distincts qu'il faut mettre en forme séparément et ensuite réunir les uns aux autres. L'assemblage pose des problèmes quant à la précision de la mise en registre et à la manière de réunir d'une manière définitive les différents feuillets.

Un exemple d'une telle technique est divulguée par le document EP 0 124 093. On y indique comment opérer à l'aide d'éléments multiples en tôle soudés ensemble.

Tout ceci complique la fabrication et en augmente le coût, spécialement si l'on souhaite obtenir un tablier dont la géométrie soit d'une précision telle qu'il puisse par exemple être fixé à la structure à l'aide d'automates, de robots ou analogues.

Le but de l'invention est de fabriquer une pièce de structure pour véhicule destinée à être fixée à cette dernière pour servir au moins partiellement de tablier séparant un compartiment antérieur d'un habitacle et qui ne présente pas tous ces inconvénients.

L'invention a pour objet une pièce de structure pour véhicule destinée à être fixée à cette dernière pour servir au moins partiellement de tablier séparant un compartiment antérieur d'un habitacle. Cette pièce est d'un type exposé dans le préambule de la revendication principale et dont les particularités ressortent notamment de la partie caractérisante de celle-ci.

D'autres caractéristiques de l'invention ressortiront de la lecture de la description et des revendications qui suivent et de l'examen du dessin annexé, donné seulement à titre d'exemple, où:

—la Fig. 1 est une vue partielle de face schématique, côté compartiment antérieur, d'un mode de réalisation d'une pièce de structure suivant l'invention mise en place; et

—la Fig. 2 est une section transversale par un plan passant par le drain d'évacuation du caisson d'auvent.

Les constituants des structures telles des coques ou châssis de véhicules automobiles et les techniques pour leur fabrication et leur assemblage sont bient connus en particulier des spécialistes de ce secteur d'activité industrielle. La description qui suit sera limitée à ce qui concerne l'invention. Tout le reste fait partie des solutions classiques parmi lesquelles l'homme du métier est à même de choisir pour retenir celles qui conviennent le mieux aux problèmes qu'il a résoudre et aux résultats qu'il a à atteindre compte-tenu des objectifs qui lui sont assignés.

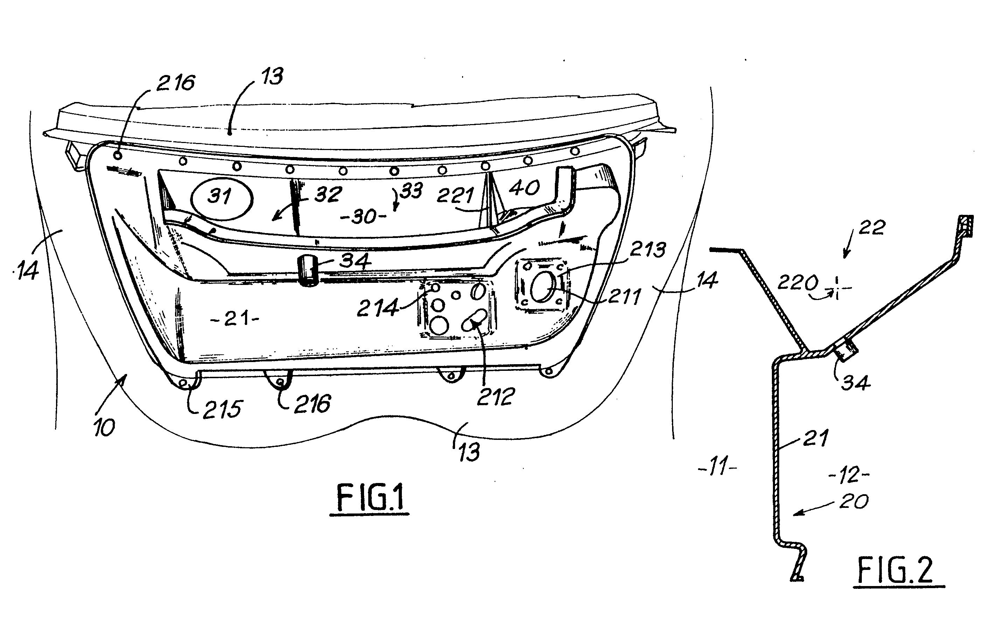

Comme on le voit notamment sur la Fig. 1, on a dessiné schématiquement en trait fin une structure 10 d'un véhicule. Cette structure comprend essentiellement des traverses 13, haute et basse, qui réunissent des flancs latéraux 14, droit et gauche. Cette structure permet de ménager un compartiment antérieur 11, le plus souvent destiné à recevoir un groupe mototracteur et un habitacle 12 destiné à loger le conducteur et ses passagers, comme cela ressort de la Fig. 2.

La pièce 20 suivant l'invention est destinée à être fixée à la structure 10 pour servir au moins partiellement de tablier séparant le compartiment antérieur 11 de l'habitacle 12.

Cette pièce est faite d'un élément monobloc obtenu d'un seul tenant.

Cette pièce est, par exemple, fabriquée en matériaux composites tels que des résines avec des charges ou des renforts, par exemple des fibres de verre ou de carbone, destinées à en modifier les propriétés mécaniques intrinsèques par exemple.

Les matériaux sont aussi choisis de manière à non seulement obtenir ces caractéristiques mécaniques mais aussi de manière à présenter des caractéristiques acoustiques telles que cette pièce contribue notablement à obtenir une bonne isolation acoustique afin que les bruits du compartiment moteur soient relativement correctement absorbés et, dans toute la mesure du possible, non transmis à l'habitacle pour obtenir un bon confort·des occupants.

Une telle pièce peut être confectionnée par une technique d'injection et/ou de compression par exemple. Le choix de la technique utilisée dépend bien sûr des matériaux constitutifs retenus, des outillages dont on dispose et, aussi, des propriétés à obtenir de la pièce ainsi manufacturée.

Comme on le voit, en particulier sur la Fig. 2, cette pièce 20 comprend une paroi 21 dont l'un des côtés forme une auge 22 qui présente un axe longitudinal 220, approximativement parallèle à cette paroi, et qui est munie d'une cloison 221 transversale la divisant. On ménage ainsi un caisson d'auvent 30 et un réservoir 40.

Le caisson d'auvent 30 présente une prise d'air 31 et ménage un logement 32 et une chambre 33.

La prise d'air 31 est destinée à être raccordée à des conduites, non représentées, de manière que de l'air prélevé à l'extérieur soit dirigé vers l'habitacle 12 pour en renouveler son atmosphère ou pour le climatiser après traversée d'un motoventilateur et d'un échangeur thermique, non représentés, comme cela est classique.

Le logement 32 est destiné à recevoir une platine d'essuie-glace avec son moteur et toute sa timonerie; cette platine n'est pas représentée car elle est de tout type classique.

La chambre 33 est destinée à recevoir un lave-glace avec ses pompes et éventuellement, ses gicleurs; cet équipement n'est pas non plus illustré.

Le réservoir 40 forme une enceinte étanche qui est destinée à être fermée par un couvercle rapporté, non dessiné. Ce couvercle est, par exemple, fixé à demeure par collage, soudage ou autres techniques assurant notamment l'étanchéité aux liquides ou bien est monté de manière amovible par exemple par emboîtement. Un tel couvercle, non dessiné, est muni par exemple d'un bouchon, lui non plus non dessiné, pour le remplissage du réservoir.

Comme on le voit sur le dessin, le caisson d'auvent 30 est muni d'un drain 34 dans la zone de l'auge 22 qui sera la plus basse lorsque la pièce 20 sera définitivement installée sur la structure 10. Ce drain sera relié à une canalisation d'évacuation, non dessinée, pour rejeter à l'extérieur les eaux qui pourraient être reçues par l'auge lorsque le véhicule circule par temps de pluie ou lors de son lavage par exemple.

On observera que la pièce selon l'invention permet de regrouper tous les équipements qui contribuent à l'entretien dans un état de propreté satisfaisant du pare-brise.

En effet, la pièce selon l'invention permet de ménager un logement pour une platine d'essuie-glace, une chambre pour un lave-glace proprement dit et aussi un réservoir pour le liquide du lave-glace, qui sont tous situés à proximité les uns des autres et très voisins. Une telle proximité permet de regrouper en tout ou partie ces équipements qui sont destinés à être réunis par des tuyauteries pour la circulation du liquide du lave-glave en particulier. On simplifie donc la circulation des fluides, on améliore l'accès à ceux-ci et on réduit les longueurs des tuyauteries à utiliser. Ceci apporte un grand avantage économique à la construction et à l'entretien.

S'il y a lieu, le logement 32 pour une platine d'essuie-glace et la chambre 33 pour un lave-glace peuvent être séparés physiquement par des cloisons pleines ou ajourées qui peuvent contribuer, aussi, à la rigidification de la pièce selon l'invention.

Comme on le voit sur la Fig. 1, la paroi 21 de la pièce 20 selon l'invention est percée d'orifices 211 et de passages multiples 212 ainsi que de méplats 213 et de points d'ancrage 214. Tout ceci est destiné à livrer passage à une colonne de direction, aux composants du pédalier d'accélérateur, de frein et d'embrayage ainsi qu'aux faisceaux de câbles électriques et autres fluides, nécessaires à la commande et au fonctionnement du véhicule; ils sont aussi destinés au montage de ces organes. Tout ceci est classique.

On observera aussi que la pièce selon l'invention est munie par exemple de pattes 215 et de trous 216 destinés à sa fixation à la structure 10 à l'aide de toute technique appropriée par exemple par vissage ou rivetage.

On notera que la pièce selon l'invention permet de réduire d'une manière notable le nombre des composants mis en jeu par rapport à la situation classique où une telle pièce servant de tablier séparateur est faite à partir de nombreux constituants multiples le plus souvent emboutis et mécanosoudés.

La conception de la pièce permet aussi, de par sa configuration, d'utiliser des techniques de montage automatique à l'aide de robots ou d'automates.

La pièce selon l'invention contribue aussi à rationnaliser l'utilisation des volumes du compartiment moteur et à regrouper un grand nombre d'organes qui ont des fonctions qui sont relativement directement tributaires les unes des autres.

**Revendications**

1. Pièce de structure (10) pour véhicule destinée à être fixée à cette dernière pour servir au moins partiellement de tablier séparant un compartiment antérieur (11) d'un habitacle (12) qui contribue à l'isolation acoustique et s'il y a lieu à la protection contre l'incendie et qui constitue aussi un caisson d'auvent (30) qui présente une prise d'air (31) extérieur pour l'habitacle (12) et qui ménage un logement (32) pour une platine d'essuie-glace ainsi qu'une chambre (33) pour un lave-glace et constitue aussi un réservoir (40) pour le liquide d'un lave-glace et qui comprend une paroi (21) dont l'un des côtés forme une auge (22) qui présente un axe longitudinal (220) approximativement parallèle à cette paroi, caractérisée en ce que cette pièce (20) est monobloc et faite d'un seul tenant et en ce que cette auge est munie d'une cloison (221) transversale la divisant en ce caisson d'auvent (30) et ce réservoir (40).

2. Pièce selon la revendication 1, caractérisée en ce que le caisson d'auvent (30) est muni d'un drain (34) d'évacuation dans la zône qui sera la plus basse lorsque la pièce sera installée sur la structure.

3. Pièce selon l'une quelconque des revendications 1 et 2, caractérisée en ce que le réservoir (40) est fermé par un couvercle rapporté.

4. Pièce selon la revendication 3, caractérisée en ce que ce couvercle est fixé à demeure ou monté amovible d'une manière assurant l'étanchéité aux liquides.

5. Pièce selon l'une quelconque des revendications 3 et 4, caractérisée en ce que le couvercle est destiné à recevoir un bouchon amovible.

6. Pièce selon l'une quelconque des revendications 1 à 5, caractérisée en ce qu'elle est faite en matériaux composites.

7. Pièce selon la revendication 6, caractérisée en ce qu'elle est obtenue par une technique d'injection.

8. Pièce selon la revendication 6, caractérisée en ce qu'elle est obtenue par une technique de compression.

9. Pièce selon l'une quelconque des revendications 1 à 8, caractérisée en ce qu'elle présente une configuration permettant de la présenter et/ou de la fixer à la structure à l'aide de robots ou d'automates.

**Patentansprüche**

1. Strukturteil (10) für ein Fahrzeug, das an letzterem befestigt ist, um wenigstens teilweise als Trennwand zur Abtrennung eines Frontabteils (11) von einem Karosseriegehäuse (12) zu dienen, die zur Schallisolation und ggf. zum Brandschutz beiträgt und die auch einen Windlaufkasten (30) bildet, der einen Außenluftzutritt (31) für das Karosseriegehäuse (12) besitzt und der einen Aussparung (32) für eine Scheibenwischer-Platine sowie eine Kammer (33) für einen Scheibenwascher bildet und ferner einen Behälter (40) für die Flüssigkeit eines Scheibenwaschers formt und der eine Wand (21) besitzt, deren eine Seite eine Wanne (22) formt, die eine zu dieser Wand annähernd parallele Längsachse (220) besitzt, dadurch gekennzeichnet, daß dieses Teil (20) einstückig ausgebildet ist und daß diese Wanne mit einer Querwand (221) versehen ist, die sie in diesen Windlaufkasten (30) und diesen Behälter (40) teilt.

2. Teil nach Anspruch 1, dadurch gekennzeichnet, daß der Windlaufkasten (30) in dem Bereich, der am tiefsten gelegen ist, wenn das Teil an der Struktur installiert ist, mit einem Auslaufstutzen (34) versehen ist.

3. Teil nach einem der Ansprüche 1 und 2, dadurch gekennzeichnet, daß der Behälter (40) durch einen angebrachten Deckel geschlossen ist.

4. Teil nach Anspruch 3, dadurch gekennzeichnet, daß der Deckel bleibend befestigt oder abnehmbar so montiert ist, daß die Abdichtung gegenüber Flüssigkeiten gewährleistet ist.

5. Teil nach einem der Ansprüche 3 und 4, dadurch gekennzeichnet, daß der Deckel zur Aufnahme eines abnehmbaren Stopfens bestimmt ist.

6. Teil nach einem der Ansprüche 1 bis 5, dadurch gekennzeichnet, daß es aus Verbundwerkstoffen hergestellt ist.

7. Teil nach Anspruch 6, dadurch gekennzeichnet, daß es in einem Spritzverfahren hergestellt ist.

8. Teil nach Anspruch 6, dadurch gekennzeichnet, daß es in einem Preßverfahren hergestellt ist.

9. Teil nach einem der Ansprüche 1 bis 8, dadurch gekennzeichnet, daß es eine Konfiguration besitzt, die seine Anordnung und/oder Befestigung an der Struktur mit Hilfe von Robotern oder Automaten gestattet.

**Claims**

1. A structural component (10) for a vehicle, adapted to be attached to the vehicle to at least partially act as a panel separating a front compartment (11) from a passenger space (12), said component contributing towards sound insulation and if necessary fire protection and also forming a scuttle (30) which has an outside air intake (31) for the passenger space (12) and also forms a receptacle (32) for a screen-wiper plate and a chamber (33) for a screen washer and also forms a tank (40) for the liquid of a screen washer, said component also comprising a wall (21) one of whose sides forms a trough (22) having a longitudinal axis (220) substantially parallel with said wall, characterized in that said component (20) is a one-piece, integrally produced component, and said trough has a transverse partition (221) which divides it into said scuttle (30) and said tank (40).

2. A component according to claim 1, characterized in that the scuttle (30) has a discharge drain (34) in the zone which will be lowest when the component is installed on the structure.

3. A component according to either of claims 1 and 2, characterized in that the tank (40) is closed by an attached cover.

4. A component according to claim 3, characterized in that the cover is attached permanently or mounted detachably in a manner ensuring sealing-tightness against liquids.

5. A component according to either of claims 3 or 4, characterized in that the cover is adapted to receive a detachable plug.

6. A component according to any of claims 1 to 5, characterized in that it is made of composite materials.

7. A component according to claim 6, characterized in that it is obtained by an injection technique.

8. A component according to claim 6, characterized in that it is obtained by a compression technique.

9. A component according to any of claims 1 to 8, characterized in that it has a configuration enabling it to be presented and/or attached to the structure by means of robots or automatic mechanisms.

FIG.2

FIG.1